# EUROPÄISCHE PATENTSCHRIFT

(11) **EP 2 879 905 B1**
(45) Veröffentlichungstag und Bekanntmachung des Hinweises auf die Patenterteilung: **11.05.2016**
(21) Anmeldenummer: 13740034.7
(22) Anmeldetag: 25.07.2013
(51) Int. Cl.: B60N 2/20, B60N 2/22, B60N 2/30, B60N 2/36

(54) **VERSTELLBARER FAHRZEUGSITZ**
ADJUSTABLE VEHICLE SEAT
SIÈGE DE VÉHICULE RÉGLABLE

(30) Priorität: 31.07.2012 DE 102012015294
(43) Veröffentlichungstag der Anmeldung: 10.06.2015
(73) Patentinhaber: Johnson Controls GmbH, 51399 Burscheid (DE)
(72) Erfinder: ROTHSTEIN, Gerhard, 42553 Velbert (DE); FAHL, Michael, 51491 Overath (DE)
(74) Vertreter: Liedhegener, Ralf
(86) Internationale Anmeldenummer: PCT/EP2013/065724
(87) Internationale Veröffentlichungsnummer: WO 2014/019933

(56) Entgegenhaltungen:
- WO-A2-03/047908
- US-A- 5 662 368

## Beschreibung

Die Erfindung betrifft einen verstellbaren Fahrzeugsitz mit den Merkmalen des Oberbegriffs des Anspruchs 1.

### Stand der Technik

Durch Benutzung bekannt sind verstellbare Fahrzeugsitze, welche ein Sitzteil und eine schwenkbar an dem Sitzteil angeordnete Rückenlehne aufweisen. Dazu weist ein solcher Fahrzeugsitz zwei Lehneneinstellbeschläge auf, mittels welchen die Rückenlehne relativ zu dem Sitzteil um eine Lehnenschwenkachse schwenkbar ist, und mittels welchen die Rückenlehne mit dem Sitzteil in mehreren Winkelpositionen verriegelbar ist.

Aus gehend von einer einsitzbaren Design-Position, in welcher die Rückenlehne annähernd senkrecht steht, ist der Fahrzeugsitz in eine Tisch-Position überführbar, in welcher die Rückenlehne auf dem Sitzteil aufliegt. Die Rückseite der Rückenlehne liegt dabei annähernd waagerecht und der Fahrzeugsitz hat die Funktion eines Tisches.

Ferner ist bekannt, dass der Fahrzeugsitz mittels zweier Verriegelungsvorrichtungen, welche im hinteren Bereich des Sitzteils angebracht sind, mit der Fahrzeugstruktur verriegelbar ist. Durch Entriegeln der beiden besagten Verriegelungsvorrichtungen ist der hintere Teil des Fahrzeugsitzes von der Fahrzeugstruktur lösbar. Durch Anheben des hinteren Teils des Fahrzeugsitzes und Schwenken nach vorne ist der Fahrzeugsitz in eine Tumble-Position überführbar, in welcher zusätzlicher Laderaum geschaffen ist.
Zur Entriegelung der zwei Verriegelungsvorrichtungen ist eine Entriegelungseinheit vorgesehen, welche kinematisch der Rückenlehne zugeordnet ist. Die Entriegelungseinheit ist mit jeder der beiden Verriegelungsvorrichtungen mittels je eines Bowdenzugs verbunden. Die Verriegelungsvorrichtungen sind dabei kinematisch dem Sitzteil zugeordnet.
Bei einer Schwenkbewegung der Rückenlehne relativ zu dem Sitzteil von der Design-Position in die Tisch-Position können die Betätigungswege der beiden Bowdenzüge beeinflusst, insbesondere verlängert oder verkürzt werden.
Aus der US 5,662,368 A ist ein verstellbarer Fahrzeugsitz bekannt, welcher von einer Design-Position in eine Position überführbar ist, in welcher die Rückenlehne auf dem Sitzteil aufliegt, und welcher mittels zweier Verriegelungsvorrichtungen an einer Fahrzeugstruktur verriegelbar ist.
Aus der DE 102 97 476 T5 ist ebenfalls ein derartiges Fahrzeugsitz bekannt.
Die US 8,047,595 B2 offenbart einen Fahrzeugsitz, welcher mittels zweier Verriegelungsvorrichtungen an einer Fahrzeugstruktur verriegelbar ist. wobei die Verriegelungsvorrichtungen mittels Bowdenzügen entriegelbar sind.

Ein gattungsgemässer Fahrzeugsitz ist aus dem Dokument WO03/047908A2 bekannt.
Aufgabe Der Erfindung liegt die Aufgabe zu Grunde, einen Fahrzeugsitz der eingangs genannten Art zu verbessern, insbesondere gleichbleibende Betätigungswege der beiden Bowdenzüge in Design-Position und Tisch-Position zu gewährleisten.

### Lösung

Diese Aufgabe wird erfindungsgemäß durch einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Ein erfindungsgemäßer verstellbarer Fahrzeugsitz umfasst ein Sitzteil und eine Rückenlehne, welche relativ zu dem Sitzteil um eine Lehnenschwenkachse schwenkbar und in einer Design-Position, in welcher die Rückenlehne annähernd aufrecht steht, und in einer Tisch-Position, in welcher die Rückenlehne auf dem Sitzteil aufliegt, verriegelbar ist, wobei die Rückenlehne in der Design-Position um einen Schwenkwinkel relativ zu der Tisch-Position geschwenkt ist, sowie zwei kinematisch dem Sitzteil zugeordnete Verriegelungsvorrichtungen, mittels welchen das Sitzteil mit einer Fahrzeugstruktur verriegelbar ist, sowie eine kinematisch der Rückenlehne zugeordnete Entriegelungseinheit zum Entriegeln der Verriegelungsvorrichtungen, welche mittels zweier Bowdenzüge mit den Verriegelungsvorrichtungen verbunden ist.

Erfindungsgemäß ist ein dem Sitzteil kinematisch zugeordnetes Durchführelement vorgesehen, welches eine erste Durchführöffnung zur Durchführung des ersten Bowdenzugs und eine zweite Durchführöffnung zur Durchführung des zweiten Bowdenzugs aufweist, wobei die erste Durchführöffnung und die zweite Durchführöffnung im gleichen Abstand von der Lehnenschwenkachse angeordnet sind, und wobei das Durchführelement annähernd zylinderförmig ausgestaltet ist und derart an dem Sitzteil befestigt ist, dass seine Zylinderachse mit der Lehnenschwenkachse fluchtet.

Dadurch sind die Betätigungswege der beiden Bowdenzüge in Design-Position und Tisch-Position immer gleich lang. Der Vorteil liegt unter anderem darin, dass bei der Montage des Fahrzeugsitzes in der Design-Position der Bowdenzug eingestellt werden kann um Toleranzen auszugleichen, wobei sichergestellt ist, dass später in der Tisch-Position eine Betätigung der Bowdenzüge zum Öffnen der Verriegelungsvorrichtungen möglich ist.

Zur Befestigung an dem Sitzteil weist das Durchführelement vorteilhaft einen radial abstehenden Befestigungsarm auf.

Vorteilhaft weisen ein erster Auflagepunkt, von welchem der erste Bowdenzug in direkter Linie zu der ersten Durchführöffnung geführt ist, und ein zweiter Auflagepunkt, von welchem der zweite Bowdenzug in direkter Linie zu der der zweiten Durchführöffnung geführt ist, den gleichen Abstand von der Lehnenschwenkachse auf.

Gemäß einer vorteilhaften Ausgestaltung der Erfindung liegen eine parallel zu der Lehnenschwenkachse verlaufende erste Ebene, auf welcher ein erster Mittelpunkt der ersten Durchführöffnung und ein zweiter Mittelpunkt der zweiten Durchführöffnung liegen, und eine parallel zu der Lehnenschwenkachse verlaufende zweite Ebene, auf welcher der erste Auflagepunkt und der zweite Auflagepunkt liegen, in der Design-Position der Rückenlehne um die Hälfte des Schwenkwinkels zueinander versetzt.

Ebenso liegen die erste Ebene und die zweite Ebene in der Tisch-Position der Rückenlehne vorteilhaft um die Hälfte des Schwenkwinkels zueinander versetzt.

Vorzugsweise liegt die Lehnenschwenkachse dabei in der ersten Ebene, was in diesem Zusammenhang als Spezialfall der parallelen Anordnung angesehen wird.

Ebenso liegt die Lehnenschwenkachse vorzugsweise in der zweiten Ebene, was in diesem Zusammenhang als Spezialfall der parallelen Anordnung angesehen wird.

Ein praktischer Aufbau ergibt sich, wenn der erste Auflagepunkt sich an einer ersten Mantelfläche eines zylindersegmentartigen Bereichs eines ersten

Entriegelungselements der Entriegelungseinrichtung befindet, und der zweite Auflagepunkt sich an einer zweiten Mantelfläche eines zylindersegmentartigen Bereichs eines zweiten Entriegelungselements der Entriegelungseinrichtung befindet.

Vorteilhaft ist dabei in der ersten Mantelfläche eine erste Führungsnut ausgebildet, in welche der erste Bowdenzug eingelegt ist, und in der zweiten Mantelfläche ist eine zweite Führungsnut ausgebildet, in welche der zweite Bowdenzug eingelegt ist.

Zum Einführen von Hüllen der Bowdenzüge weist das Durchführelement vorzugsweise mindestens eine radial abstehende Manschette auf.

Gemäß einer vorteilhaften Weiterbildung der Erfindung verhindert das Durchführelement in der Design-Position eine Bewegung eines Entriegelungshebels der Entriegelungseinrichtung zur Entriegelung der Verriegelungsvorrichtungen.

Dazu weist das Durchführelement vorzugsweise an einer Stirnseite mindestens einen diametral verlaufenden Schlitz auf, welcher mit einer an dem Entriegelungshebel angebrachten Blockiernase zusammen wirkt.

Dabei ist das Durchführelement vorteilhaft derart angeordnet, dass bei in Design-Position befindlichem Fahrzeugsitz der Schlitz schräg zu der Bewegungsrichtung der Blockiernase verläuft.

Das Durchführelement ist ferner vorteilhaft derart angeordnet, dass bei in Tisch-Position befindlichem Fahrzeugsitz der Schlitz in die gleiche Richtung verläuft wie die Bewegungsrichtung der Blockiernase.

Bei einer Schwenkung der Rückenlehne von der Design-Position in die Tisch-Position dreht sich dabei das Durchführelement relativ zu der Entriegelungseinheit.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:
- Fig. 1:: eine schematische Darstellung eines Fahrzeugsitzes in Design-Position,
- Fig. 2:: eine schematische Darstellung eines Fahrzeugsitzes in Tisch-Position,
- Fig. 3:: eine schematische Darstellung eines Fahrzeugsitzes in Tumble-Position,
- Fig. 4:: eine perspektivische Darstellung einer Verriegelungseinheit,
- Fig. 5:: eine perspektivische Darstellung eines Durchführelements,
- Fig. 6:: eine perspektivische Darstellung des Durchführelements nach Fig. 5 aus einer anderen Perspektive,
- Fig. 7:: eine Seitenansicht des Durchführelements nach Fig. 5 in Design-Position und
- Fig. 8:: eine Seitenansicht des Durchführelements nach Fig. 5 Tisch-Position.

Ein Fahrzeugsitz 1 für ein Kraftfahrzeug weist ein Sitzteil 2 und eine Rückenlehne 3 auf. Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die Rückenlehne 3 ist um eine in Querrichtung verlaufende Lehnenschwenkachse 6 schwenkbar an dem Sitzteil 2 angebracht und umfasst unter anderem ein Rückenlehnenblech 4. Mittels zweier Lehneneinstellbeschläge 5, welche vorliegend als Rastbeschläge ausgebildet sind, ist die Rückenlehne 3 in mehreren diskreten Winkelstellungen relativ zu dem Sitzteil 2 einstellbar. Ein derartiger Lehneneinstellbeschlag ist beispielsweise in der DE 10 2004 041 449 B3 offenbart, deren diesbezüglicher Offenbarungsgehalt ausdrücklich einbezogen wird.

An einem dem Sitzteil abgewandten Ende der Rückenlehne 3 ist eine Kopfstütze angebracht, welche vorliegend höheneinstellbar und neigungseinstellbar ausgeführt ist.

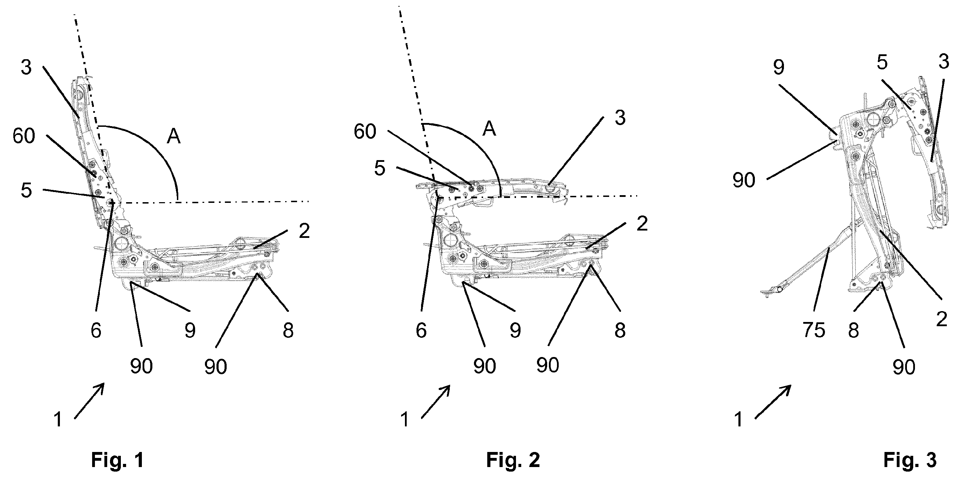

In der Design-Position des Fahrzeugsitzes 1, welche in Fig. 1 dargestellt ist, ist die Rückenlehne 3 in einer annähernd senkrechten Position. Durch Entriegeln der Lehneneinstellbeschläge 5 und Schwenken der Rückenlehne 3 in eine waagerechte Position ist der Fahrzeugsitz 1 in eine Tisch-Position überführbar. In der Tisch-Position, welche in Fig. 2 dargestellt ist, liegt die Rückenlehne 3 auf dem Sitzteil 2 auf und verläuft annähernd parallel zu diesem und parallel zu dem Fahrzeugboden. In der Design-Position ist die Rückenlehne 3 dabei relativ zu der Tisch-Position um einen Schwenkwinkel (A) geschwenkt.

Das Sitzteil 2 ist mit der Fahrzeugstruktur lösbar verbunden. Dazu weist das Sitzteil 2 im in Fahrtrichtung vorderen Bereich beidseitig je einen vorderen Fuß 8 auf, welcher eine Verriegelungsvorrichtung 90 umfasst. Ferner weist das Sitzteil 2 im in Fahrtrichtung hinteren Bereich beidseitig je einen hinteren Fuß 9 auf, welcher eine Verriegelungsvorrichtung 90 umfasst. Eine derartige Verriegelungsvorrichtung ist beispielsweise in der WO 2004 069 585 A1 offenbart, deren diesbezüglicher Offenbarungsgehalt ausdrücklich einbezogen wird.

In der Design-Position und in der Tisch-Position des Fahrzeugsitzes 1 sind die Verriegelungsvorrichtungen 90 mit an der Fahrzeugstruktur angebrachten Bolzen verriegelt. Zum Überführen des Fahrzeugsitzes 1 aus der Tisch-Position in eine Tumble-Position werden die beiden Verriegelungsvorrichtungen 90 der hinteren Füße 9 gleichzeitig entriegelt, wodurch die hinteren Füße 9 sich von der Fahrzeugstruktur lösen.

In der Tumble-Position, welche in Fig. 3 dargestellt ist, liegt die Rückenlehne 3 auf dem Sitzteil 2 auf und verläuft annähernd parallel zu diesem. Der Fahrzeugsitz 1 ist nach vorne geklappt und die Rückenlehne 3 und das Sitzteil 2 sind relativ zu dem Fahrzeugboden geneigt. Dabei wird der Fahrzeugsitz 1 mittels einer Strebe 75 in der Tumble-Position gehalten.

Aus Sicherheitsgründen dürfen in der Design-Position die beiden Verriegelungsvorrichtungen 90 der hinteren Füße 9 nicht entriegelt werden, sondern lediglich in der Tisch-Position. In der Tumble-Position sind die Verriegelungsvorrichtungen 90 entriegelt. Die Verriegelungsvorrichtungen 90 dürfen also nur entriegelt werden, wenn die Rückenlehne 3 auf dem Sitzteil 2 aufliegt.

Ebenso dürfen aus Sicherheitsgründen in der Tumble-Position die beiden Lehneneinstellbeschläge 5 nicht entriegelt werden, sondern lediglich in der Tisch-Position sowie in der Design-Position. Die Lehneneinstellbeschläge 5 dürfen also nur entriegelt werden, wenn beide Verriegelungsvorrichtungen 90 verriegelt sind.

Der Fahrzeugsitz 1 umfasst eine auch als Interlockeinheit bezeichnete Verriegelungseinheit 50, welche im Folgenden näher beschrieben wird, und welche sicher stellt, dass die oben beschriebenen Entriegelungsvorgänge nur in den entsprechend definierten Positionen des Fahrzeugsitzes 1 durchführbar sind.

Eine Übertragungsstange 60, welche kinematisch der Rückenlehne 3 zugeordnet ist, verläuft parallel zu der Lehnenschwenkachse 6. Die Übertragungsstange 60 ist mit beiden seitlich am Fahrzeugsitz 1 angebrachten Lehneneinstellbeschlägen 5 verbunden und dient zum gleichzeitigen Entriegeln beider Lehneneinstellbeschläge 5. Die Übertragungsstange 60 ist auf der in Fahrtrichtung vorderen Seite des Rückenlehnenblechs 4 angeordnet.

Durch eine Drehung der Übertragungsstange 60 um einen vorgegebenen Winkel um ihre in Querrichtung verlaufende Mittelachse erfolgt eine Entriegelung der Lehneneinstellbeschläge 5. Sind die Lehneneinstellbeschläge 5 entriegelt, so kann die Rückenlehne 3 relativ zu dem Sitzteil 2 um die Lehnenschwenkachse 6 geschwenkt werden.

In der Design-Position, in der Tisch-Position und in der Tumble-Position sind die Lehneneinstellbeschläge 5 jeweils verriegelt. Lediglich während einer Schwenkbewegung der Rückenlehne 3 sind die Lehneneinstellbeschläge 5 entriegelt.

Zum gleichzeitigen Entriegeln beider Verriegelungsvorrichtungen 90 der hinteren Füße 9 ist eine Entriegelungseinheit 10 vorgesehen, welche an dem Rückenlehnenblech 4 befestigt und damit kinematisch ebenfalls der Rückenlehne 3 zugeordnet ist. Die Entriegelungseinheit 10 ist dabei auf der in Fahrtrichtung vorderen Seite des Rückenlehnenblechs 4 angeordnet.

Die Entriegelungseinheit 10 umfasst eine Grundplatte 70, welche weitgehend parallel zu dem Rückenlehnenblech 4 angeordnet ist und welche gemeinsam mit dem Rückenlehnenblech 4 eine teilweise Kapselung der übrigen Teile der Entriegelungseinheit 10 bildet.

Ein Entriegelungshebel 30 ist um eine Betätigungsschwenkachse 44 schwenkbar gelagert. Eine nicht dargestellte Rückholfeder beaufschlagt den Entriegelungshebel 30 stets in Richtung auf eine Ruheposition hin.

An einem in radialer Richtung abstehenden Arm weist der Entriegelungshebel 30 eine Gurtöse 31 auf, in welche ein als Betätigungselement dienendes Gurtband 62 eingehängt ist. Das Gurtband 62 verläuft von der Gurtöse 31 zunächst in Vertikalrichtung zu einem Umlenkbügel 73. An dem Umlenkbügel 73 wird das Gurtband 62 entgegen der Fahrtrichtung umgelenkt und zu einer Gurtöffnung 66 im Rückenlehnenblech 4 geführt. Das Gurtband 62 ist durch die Gurtöffnung 66 hindurch geführt und ragt entgegen der Fahrtrichtung, also nach hinten, aus der Rückenlehne 3 heraus.

Durch Zug an dem aus der Rückenlehne 3 ragenden Ende des Gurtbandes 62 wird der Entriegelungshebel 30 um die Betätigungsschwenkachse 44 in Richtung zu seiner Betätigungsposition hin geschwenkt. Ein nicht dargestelltes Begrenzungselement wirkt als Anschlag und begrenzt die Bewegung des Entriegelungshebels 30 nach Erreichen der Betätigungsposition.

Um eine Steuerschwenkachse 43, welche parallel zu der Betätigungsschwenkachse 44 verläuft, ist ein Steuerzahnrad 20 drehbar gelagert. Das Steuerzahnrad 20 weist etwa entlang seines halben Umfangs eine Steuerverzahnung auf, welche mit einer Entriegelungsverzahnung 33 des Entriegelungshebels 30 kämmt.

Eine erstes Entriegelungselement 11 ist axial neben dem Steuerzahnrad 20 um die Steuerschwenkachse 43 drehbar gelagert. Das erste Entriegelungselement 11 weist unter anderem einen zylindersegmentartigen Bereich mit einer ersten Mantelfläche 55 auf, in dem eine erste Führungsnut 15 ausgebildet ist. In die erste Führungsnut 15 ist ein erster Bowdenzug 83 eingelegt. Der erste Bowdenzug 83 weist an seinem Ende einen ersten Nippel 85 auf, welcher in einer ersten Bowdenzugeinhängung 13 des ersten Entriegelungselements 11 eingehängt ist.

Der erste Bowdenzug 83 verläuft von dem ersten Entriegelungselement 11 zu einem Durchführelement 80, welches an dem Sitzteil 2 befestigt ist. Dabei wird ein Punkt, an dem der erste Bowdenzug 83 die erste Führungsnut 15 tangential verlässt und in direkter Linie zu einer ersten Durchführöffnung 81 des Durchführelements 80 geführt ist, als erster Auflagepunkt 87 bezeichnet. Der erste Bowdenzug 83 verläuft weiter durch die erste Durchführöffnung 81 des Durchführelements 80 hindurch zu der einen der beiden Verriegelungsvorrichtungen 90 in einem der hinteren Füße 9.

Ein zweites Entriegelungselement 12 ist ebenfalls axial neben dem Steuerzahnrad 20 um die Steuerschwenkachse 43 drehbar gelagert. Das zweite Entriegelungselement 12 weist unter anderem einen zylindersegmentartigen Bereich mit einer zweiten Mantelfläche 56 auf, in dem eine zweite Führungsnut 16 ausgebildet ist. In die zweite Führungsnut 16 ist ein zweiter Bowdenzug 84 eingelegt. Der zweite Bowdenzug 84 weist an seinem Ende einen zweiten Nippel 86 auf, welcher in einer zweiten Bowdenzugeinhängung 14 des zweiten Entriegelungselements 12 eingehängt ist.

Der zweite Bowdenzug 84 verläuft von dem zweiten Entriegelungselement 12 zu dem Durchführelement 80, welches an dem Sitzteil 2 befestigt ist. Dabei wird ein Punkt, an dem der zweite Bowdenzug 84 die zweie Führungsnut 16 tangential verlässt und in direkter Linie zu einer zweiten Durchführöffnung 82 des Durchführelements 80 geführt ist, als zweiter Auflagepunkt 88 bezeichnet. Der zweite Bowdenzug 84 verläuft weiter durch die zweite Durchführöffnung 82 des Durchführelements 80 hindurch zu der anderen der beiden Verriegelungsvorrichtungen 90 in einem der hinteren Füße 9.

Durch den Mittelpunkt der ersten Durchführöffnung 81, den Mittelpunkt der zweiten Durchführöffnung 82 und die Lehnenschwenkachse 6 ist eine erste Ebene 51 definiert. Durch den ersten Auflagepunkt 87, den zweiten Auflagepunkt 88 und die Lehnenschwenkachse 6 ist eine zweite Ebene 52 definiert.

Wenn die Entriegelungseinheit 10 sich in Ausgangsposition befindet, so befindet sich der Entriegelungshebel 30 in Ruheposition, das Steuerzahnrad 20 befindet sich in Verriegelungsposition, die Entriegelungselemente 11, 12 befinden sich in Verriegelungsstellung, und die beiden Verriegelungsvorrichtungen 90 sind verriegelt. Wenn die Entriegelungseinheit 10 sich in Aktivierungsposition befindet, so befindet sich der Entriegelungshebel 30 in Betätigungsposition, das Steuerzahnrad 20 befindet sich in Entriegelungsposition, die Entriegelungselemente 11, 12 befinden sich in Entriegelungsstellung, und die beiden Verriegelungsvorrichtungen 90 sind entriegelt.

Zwischen dem Steuerzahnrad 20 und dem ersten Entriegelungselement 11 ist eine nicht dargestellte Steuerfeder vorgesehen, welche das erste Entriegelungselement 11 relativ zu dem Steuerzahnrad 20 zur Entriegelungsstellung hin beaufschlagt. Ebenso ist zwischen dem Steuerzahnrad 20 und dem zweiten Entriegelungselement 12 eine Steuerfeder vorgesehen, welche das zweite Entriegelungselement 12 relativ zu dem Steuerzahnrad 20 zur Entriegelungsstellung hin beaufschlagt. Die beiden Steuerfedern sind dabei vorliegend als Drehschenkelfedern ausgebildet und in entsprechende Öffnungen in den Entriegelungselementen 11, 12 und dem Steuerzahnrad 20 eingesteckt. In axialer Richtung bezüglich der Steuerschwenkachse 43 ist das Steuerzahnrad 20 dabei zwischen dem ersten Entriegelungselement 11 und dem zweiten Entriegelungselement 12 angeordnet. Die beiden Steuerfedern befinden sich jeweils zwischen dem Steuerzahnrad 20 und dem zugehörigen Entriegelungselement 11, 12.

In der Ausgangsposition der Entriegelungseinheit 10 ragt ein verhältnismäßig kurzes Ende des Gurtbandes 62 aus der Rückenlehne 3 nach hinten heraus. Dadurch wird einem Benutzer signalisiert, dass beide Verriegelungsvorrichtungen 90 verriegelt sind.

Durch Zug an dem aus der Rückenlehne 3 heraus ragenden Ende des Gurtbandes 62 wird der Entriegelungshebel 30 entgegen der Kraft der Rückholfeder in Richtung auf die Betätigungsposition hin geschwenkt. Dabei wird das Steuerzahnrad 20 in Richtung auf die Entriegelungsposition hin gedreht. Nachdem das Steuerzahnrad 20 einen Leerweg durchlaufen hat schlägt ein an dem Steuerzahnrad 20 angebrachter Mitnehmer 24 an einem ersten Gegenanschlag 17 des ersten Entriegelungselements 11 und an einem zweiten Gegenanschlag 18 des zweiten Entriegelungselements 12 an.

Der Mitnehmer 24 ist vorliegend in einem der Steuerverzahnung diametral gegenüberliegenden Bereich des Steuerzahnrades 20 angebracht und steht in axialer Richtung beidseitig von diesem ab. Die Gegenanschläge 17, 18 der Entriegelungselemente 11, 12 sind im Wesentlichen als in radialer und axialer Richtung verlaufende glatte Flächen ausgebildet.

Durch weiteren Zug an dem Ende des Gurtbandes 62 nimmt das Steuerzahnrad 20 die Entriegelungselemente 11, 12 mit, wodurch diese in Richtung auf die Entriegelungsstellung hin gedreht werden. Dabei erfolgt ein Zug an den Bowdenzügen 83, 84, wodurch die Verriegelungsvorrichtungen 90 entriegelt werden. Diese Bewegung endet, wenn der Entriegelungshebel 30 an dem Begrenzungselement anschlägt und die Entriegelungseinheit 10 sich in Aktivierungsposition befindet. Das Gurtband 62 ragt dann verhältnismäßig weit aus der Rückenlehne 3 heraus. Dadurch wird einem Benutzer signalisiert, dass mindestens eine der beiden Verriegelungsvorrichtungen 90 entriegelt ist.

Lässt der Benutzer nun das Gurtband 62 los, so wird der Entriegelungshebel 30 durch die Kraft der Rückholfeder 60 in Richtung auf die Ruheposition hin geschwenkt. Dadurch wird auch das Steuerzahnrad 20 in Richtung auf die Verriegelungsposition hin gedreht und der Mitnehmer 24 entfernt sich von den Gegenanschlägen 17, 18 der Entriegelungselemente 11, 12. Die Entriegelungselemente 11, 12 verbleiben, aufgrund der Beaufschlagung durch die Steuerfedern in der Entriegelungsstellung.

Die Bewegung des Entriegelungshebels 30 endet, wenn ein Anschlagelement 34 des Entriegelungshebels 30 an die erste Mantelfläche 55 und/oder an die zweite Mantelfläche 56 anschlägt. Das Anschlagelement 34 ist vorliegend zylinderförmig ausgestaltet und an dem Arm des Entriegelungshebels 30 angebracht. Das Anschlagelement 34 ist in radialer Richtung näher an der Betätigungsschwenkachse 44 angeordnet als die Gurtöse 31 und steht in axialer Richtung beidseitig von dem Arm ab.

Der Entriegelungshebel 30 befindet sich nun in Offenhalteposition und die Entriegelungseinheit 10 befindet sich in Anzeigeposition. Das Gurtband 62 ist, im Vergleich zu der Aktivierungsposition, zwar teilweise in die Rückenlehne 3 eingezogen, ragt aber immer noch verhältnismäßig weit aus der Rückenlehne 3 heraus. Dadurch wird einem Benutzer signalisiert, dass mindestens eine der beiden Verriegelungsvorrichtungen 90 entriegelt ist.

Die hinteren Füße 9 des Fahrzeugsitzes 1 können nun von der Fahrzeugstruktur entfernt werden, und der Fahrzeugsitz 1 kann nach vorne in die Tumble-Position geklappt werden.

Beim erneuten Aufsetzen der hinteren Füße 9 auf die Bolzen der Fahrzeugstruktur kann der Fahrzeugsitz 1 verkanten. Dabei verriegelt nur eine der beiden Verriegelungsvorrichtungen 90 mit dem zugeordneten Bolzen in der Fahrzeugstruktur, während die andere der beiden Verriegelungsvorrichtungen 90 nicht oder erst mit zeitlicher Verzögerung mit dem zugeordneten Bolzen in der Fahrzeugstruktur verriegelt.

Beispielsweise ist nach dem Aufsetzen der hinteren Füße auf die Bolzen die mit dem ersten Entriegelungselement 11 verbundene Verriegelungsvorrichtung 90 entriegelt, und die mit dem zweiten Entriegelungselement 12 verbundene Verriegelungsvorrichtung 90 ist verriegelt. Beim Verriegeln zieht die mit dem zweiten Entriegelungselement 12 verbundene Verriegelungsvorrichtung 90 an dem zweiten Bowdenzug 84, wodurch das zweite Entriegelungselement 12 in die Verriegelungsstellung gedreht wird. Das erste Entriegelungselement 11 verbleibt jedoch in der Entriegelungsstellung.

Das Anschlagelement 34 des Entriegelungshebels 30 verliert dabei den Kontakt zu der zweiten Mantelfläche 56, liegt jedoch immer noch an der ersten Mantelfläche 55 an. Der Entriegelungshebel 30 verbleibt daher in der Offenhalteposition und das Gurtband 62 ragt immer noch verhältnismäßig weit aus der Rückenlehne 3 heraus. Einem Benutzer wird somit signalisiert, dass mindestens eine der beiden Verriegelungsvorrichtungen 90 entriegelt ist.

Verriegelt nun auch die mit dem ersten Entriegelungselement 11 verbundene Verriegelungsvorrichtung 90, so zieht diese an dem ersten Bowdenzug 83, wodurch auch das erste Entriegelungselement 11 in die Verriegelungsstellung gedreht wird. Dabei verliert das Anschlagelement 34 des Entriegelungshebels 30 auch den Kontakt zu der ersten Mantelfläche 55 und der Entriegelungshebel 30 wird durch die Kraft der Rückholfeder in die Ruheposition zurück gedreht. Dabei wird auch das Steuerzahnrad 20 in die Verriegelungsposition zurück gedreht.

Die Entriegelungseinheit 10 befindet sich somit wieder in der Ausgangsposition. Das Gurtband 62 wird von dem Entriegelungshebel 30 dabei so weit in die Rückenlehne 3 hinein gezogen, dass nur noch ein verhältnismäßig kurzes Ende des Gurtbandes 62 außen sichtbar ist. Dadurch wird einem Benutzer signalisiert, dass beide Verriegelungsvorrichtungen 90 verriegelt sind.

Auf der Übertragungsstange 60 ist, nahe der Entriegelungseinheit 10, ein Blockierhebel 54 angebracht und drehfest mit dieser verbunden. Bei einer Entriegelung der Lehneneinstellbeschläge 5 schwenkt der Blockierhebel 54 entsprechend mit. Der Entriegelungshebel 30 weist einen Blockierarm 36 auf, welcher mit dem Blockierhebel 54 zusammenwirkt.

In der Design-Position, sowie in der Tisch-Position, befindet sich der Entriegelungshebel 30 jeweils in Ruheposition, wobei der Blockierarm 36 sich seitlich neben dem Blockierhebel 54 befindet. Beim Entriegeln der Lehneneinstellbeschläge 5 schwenkt der Blockierhebel 54 seitlich an dem Blockierarm 36 vorbei. Ein Entriegeln der Lehneneinstellbeschläge 5 ist somit in der Design-Position und in der Tisch-Position des Fahrzeugsitzes 1 möglich. Ebenso schwenkt der Blockierarm 36 beim Entriegeln der Verriegelungsvorrichtungen 90 an dem Blockierhebel 54 vorbei. Ein Entriegeln der Verriegelungsvorrichtungen 90 ist somit in der Design-Position und in der Tisch-Position des Fahrzeugsitzes 1 möglich.

Während des Entriegelns der Lehneneinstellbeschläge 5, also so lange die Lehneneinstellbeschläge 5 entriegelt sind, befindet sich der Blockierhebel 54 vor dem Blockierarm 36. Beim Versuch, die Verriegelungsvorrichtungen 90 zu entriegeln schlägt der Blockierarm 36 des Entriegelungshebels 30 an den Blockierhebel 54 an. Ein Entriegeln der Verriegelungsvorrichtungen 90 bei entriegelten Lehneneinstellbeschlägen 5 ist somit nicht möglich.

In der Tumble-Position befindet sich der Entriegelungshebel 30 in Offenhalteposition. Dabei befindet sich der Blockierarm 36 unmittelbar vor dem Blockierhebel 54. Beim Versuch, die Lehneneinstellbeschläge 5 zu entriegeln schlägt der Blockierhebel 54 an den Blockierarm 36 an. Ein Entriegeln der Lehneneinstellbeschläge 5 ist somit in der Tumble-Position des Fahrzeugsitzes 1 nicht möglich.

Das an dem Sitzteil 2 befestigte Durchführelement 80 ist annähernd zylinderförmig ausgestaltet, wobei seine Zylinderachse mit der Lehnenschwenkachse 6 fluchtet. Das Durchführelement 80 ist somit kinematisch dem Sitzteil 2 zugeordnet. Bei einer Schwenkung der Rückenlehne 3 von der Design-Position in die Tisch-Position dreht sich das Durchführelement 80 somit relativ zu der Entriegelungseinheit 10.

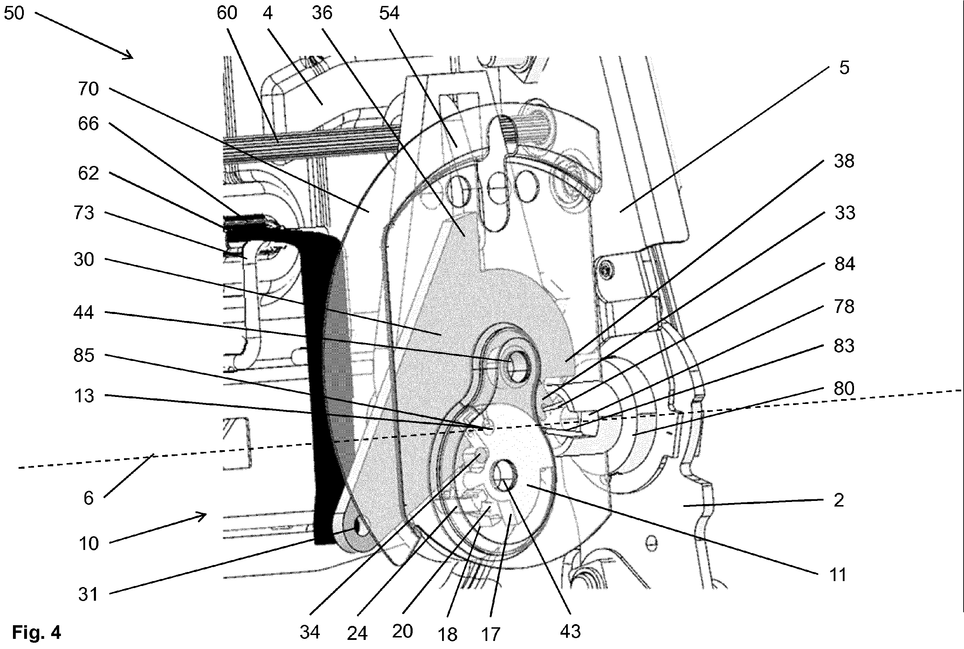

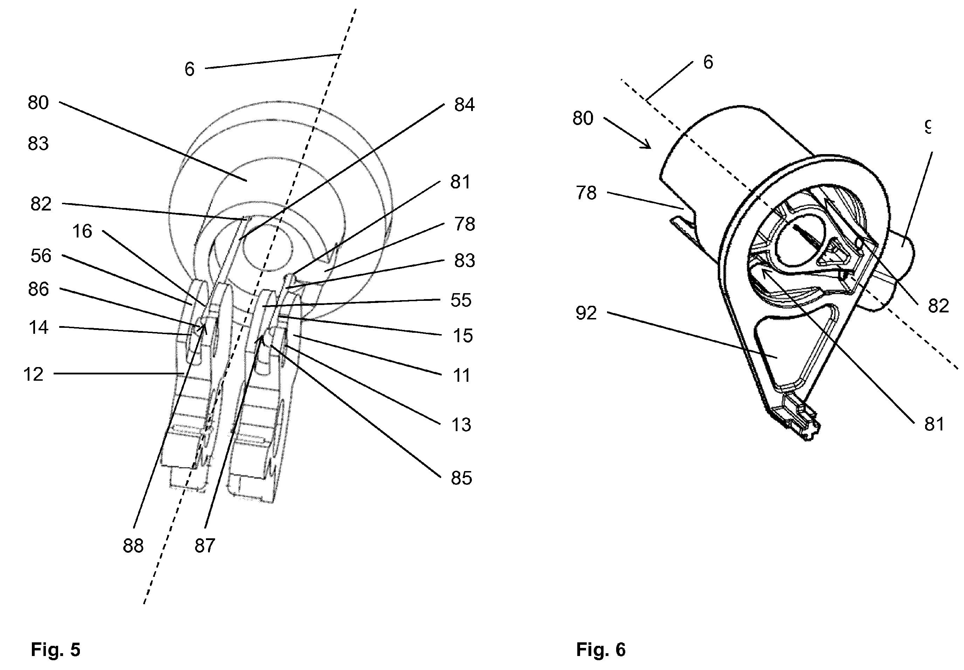

Das Durchführelement 80 weist radial abstehend einen Befestigungsarm 92 auf, welcher zur Befestigung an dem Sitzteil 2 dient, und welcher in den Darstellungen in Fig. 4 und Fig. 5 nicht dargestellt ist. Ferner weist das Durchführelement 80 radial abstehend eine Manschette 94 auf, in welche Hüllen der Bowdenzüge 83, 84 einführbar sind. Die Manschette 94 ist in den Darstellungen in Fig. 4 und Fig. 5 ebenfalls nicht dargestellt.

Das Durchführelement 80 weist an einer Stirnseite, welche in Querrichtung zum Inneren des Fahrzeugsitzes 1 weist, also der Entriegelungseinheit 10 zugewandt ist, einen diametral verlaufenden Schlitz 78 auf. Das Durchführelement 80 ist derart angeordnet, dass der Schlitz 78 bei in der Tisch-Position befindlichem Fahrzeugsitz 1 mit einer an dem Entriegelungshebel 30 angebrachten Blockiernase 38 fluchtet.

Bei in Design-Position befindlichem Fahrzeugsitz 1 verläuft der Schlitz 78 schräg zu der Bewegungsrichtung der Blockiernase 38. Beim Versuch, die Verriegelungsvorrichtungen 90 zu entriegeln schlägt die Blockiernase 38 des Entriegelungshebels 30 an dem Zylindermantel des Durchführelements 80 an. Ein Entriegeln der Verriegelungsvorrichtungen 90 bei in Design-Position befindlichem Fahrzeugsitz 1 ist somit nicht möglich.

Bei in Tisch-Position befindlichem Fahrzeugsitz 1 verläuft der Schlitz 78 in die gleiche Richtung wie die Bewegungsrichtung der Blockiernase 38. Die Blockiernase 38 schwenkt beim Entriegeln der Verriegelungsvorrichtungen 90 in den Schlitz 78 ein. Ein Entriegeln der Verriegelungsvorrichtungen 90 ist somit in der Tisch-Position des Fahrzeugsitzes 1 möglich.

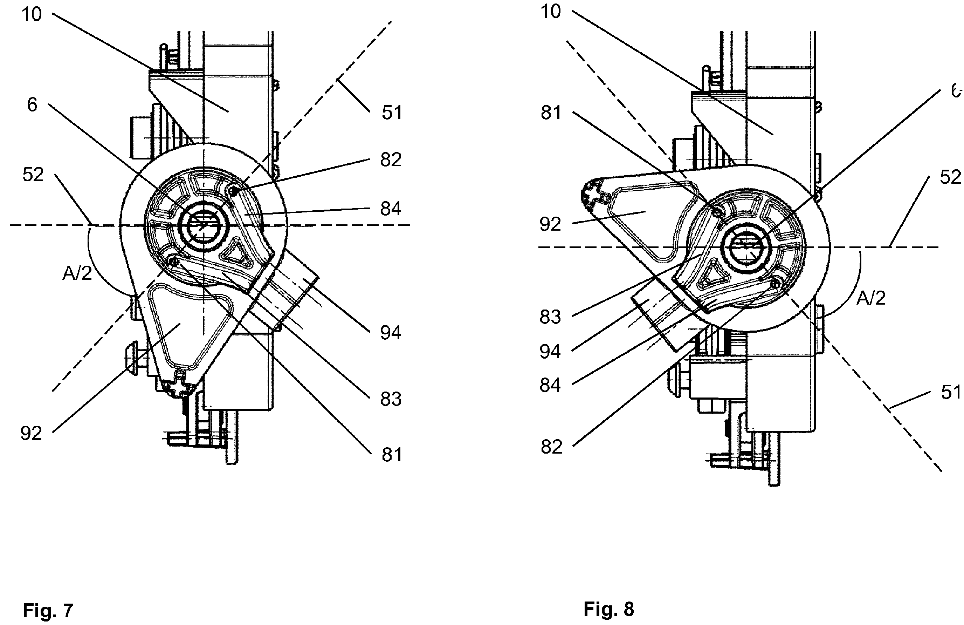

In der Tumble-Position befindet sich der Entriegelungshebel 30 in Offenhalteposition. Dabei befindet sich die Blockiernase 38 des Entriegelungshebels 30 innerhalb des Schlitzes 78 des Durchführelements 80. In der Tumble-Position ist, wie oben beschrieben, ein Entriegeln der Lehneneinstellbeschläge 5 nicht möglich. Selbst wenn die Lehneneinstellbeschläge 5 in der Tumble-Position entriegelt wären, wäre eine Schwenkbewegung der Rückenlehne 3 relativ zu dem Sitzteil 2 nicht möglich. Die Randbereiche des Schlitzes 78 würden in diesem Fall an der Blockiernase 36 anschlagen und eine Schwenkbewegung der Rückenlehne 3 relativ zu dem Sitzteil 2 verhindern.
In der in Fig. 7 dargestellten Design-Position ist die erste Ebene 51 relativ zu der zweiten Ebene 52 um die Hälfte des Schwenkwinkels A versetzt. In der in Fig. 8 dargestellten Tisch-Position ist die erste Ebene 51 relativ zu der zweiten Ebene 52 ebenfalls um die Hälfte des Schwenkwinkels A versetzt. In der in Fig. 8 dargestellten Tisch-Position ist die erste Ebene 51 relativ zu ihrer in Fig. 7 dargestellten Lage in Design-Position um den Schwenkwinkel A versetzt.

### Bezugszeichenliste

- A: Schwenkwinkel
- 1: Fahrzeugsitz
- 2: Sitzteil
- 3: Rückenlehne
- 4: Rückenlehnenblech
- 5: Lehneneinstellbeschlag
- 6: Lehnenschwenkachse
- 8: Vorderer Fuß
- 9: Hinterer Fuß
- 10: Entriegelungseinheit
- 11: Erstes Entriegelungselement
- 12: Zweites Entriegelungselement
- 13: Erste Bowdenzugeinhängung
- 14: Zweite Bowdenzugeinhängung
- 15: Erste Führungsnut
- 16: Zweite Führungsnut
- 17: Erster Gegenanschlag
- 18: Zweiter Gegenanschlag
- 20: Steuerzahnrad
- 24: Mitnehmer
- 30: Entriegelungshebel
- 31: Gurtöse
- 33: Entriegelungsverzahnung
- 34: Anschlagelement
- 36: Blockierarm
- 38: Blockiernase
- 43: Steuerschwenkachse
- 44: Betätigungsschwenkachse
- 50: Verriegelungseinheit
- 51: Erste Ebene
- 52: Zweite Ebene
- 54: Blockierhebel
- 55: Erste Mantelfläche
- 56: Zweite Mantelfläche
- 60: Übertragungsstange
- 62: Gurtband
- 66: Gurtöffnung
- 70: Grundplatte
- 73: Umlenkbügel
- 75: Strebe
- 78: Schlitz
- 80: Durchführelement
- 81: Erste Durchführöffnung
- 82: Zweite Durchführöffnung
- 83: Erster Bowdenzug
- 84: Zweiter Bowdenzug
- 85: Erster Nippel
- 86: Zweiter Nippel
- 87: Erster Auflagepunkt
- 88: Zweiter Auflagepunkt
- 90: Verriegelungsvorrichtung
- 92: Befestigungsarm
- 94: Manschette

## Patentansprüche

1. Verstellbarer Fahrzeugsitz (1), umfassend
ein Sitzteil (2) und eine Rückenlehne (3), welche relativ zu dem Sitzteil (2) um eine Lehnenschwenkachse (6) schwenkbar und in einer Design-Position, in welcher die Rückenlehne (3) annähernd aufrecht steht, und in einer Tisch-Position, in welcher die Rückenlehne (3) auf dem Sitzteil (2) aufliegt, verriegelbar ist,
wobei die Rückenlehne (3) in der Design-Position um einen Schwenkwinkel (A) relativ zu der Tisch-Position geschwenkt ist,
sowie zwei kinematisch dem Sitzteil (2) zugeordnete Verriegelungsvorrichtungen (90), mittels welchen das Sitzteil (2) mit einer Fahrzeugstruktur verriegelbar ist,
sowie eine kinematisch der Rückenlehne (3) zugeordnete Entriegelungseinheit (10) zum Entriegeln der Verriegelungsvorrichtungen (90), welche mittels zweier Bowdenzüge (83, 84) mit den Verriegelungsvorrichtungen (90) verbunden ist,
**dadurch gekennzeichnet, dass**
ein dem Sitzteil (2) kinematisch zugeordnetes Durchführelement (80) vorgesehen ist, welches eine erste Durchführöffnung (81) zur Durchführung des ersten Bowdenzugs (83) und eine zweite Durchführöffnung (82) zur Durchführung des zweiten Bowdenzugs (84) aufweist,
wobei die erste Durchführöffnung (81) und die zweite Durchführöffnung (82) im gleichen Abstand von der Lehnenschwenkachse (6) angeordnet sind, und wobei das Durchführelement (80) annähernd zylinderförmig ausgestaltet ist und derart an dem Sitzteil (2) befestigt ist, dass seine Zylinderachse mit der Lehnenschwenkachse (6) fluchtet.

2. Verstellbarer Fahrzeugsitz (1) nach Anspruch 1, **dadurch gekennzeichnet, dass** das Durchführelement (80) einen radial abstehenden Befestigungsarm (92) aufweist.

3. Verstellbarer Fahrzeugsitz (1) nach einem der vorstehenden Ansprüche, **dadurch gekennzeichnet, dass** ein erster Auflagepunkt (87), von welchem der erste Bowdenzug (83) in direkter Linie zu der ersten Durchführöffnung (81) geführt ist, und ein zweiter Auflagepunkt (88), von welchem der zweite Bowdenzug (84) in direkter Linie zu der zweiten Durchführöffnung (82) geführt ist, den gleichen Abstand von der Lehnenschwenkachse (6) aufweisen.

4. Verstellbarer Fahrzeugsitz (1) nach Anspruch 3, **dadurch gekennzeichnet, dass** eine parallel zu der Lehnenschwenkachse (6) verlaufende erste Ebene (51), auf welcher ein erster Mittelpunkt der ersten Durchführöffnung (81) und ein zweiter Mittelpunkt der zweiten Durchführöffnung (82) liegen, und eine parallel zu der Lehnenschwenkachse (6) verlaufende zweite Ebene (52), auf welcher der erste Auflagepunkt (87) und der zweite Auflagepunkt (88) liegen, in der Design-Position der Rückenlehne (3) um die Hälfte des Schwenkwinkels (A) zueinander versetzt liegen.

5. Verstellbarer Fahrzeugsitz (1) nach Anspruch 4, **dadurch gekennzeichnet, dass** die erste Ebene (51) und die zweite Ebene (52) in der Tisch-Position der Rückenlehne (3) um die Hälfte des Schwenkwinkels (A) zueinander versetzt liegen.

6. Verstellbarer Fahrzeugsitz (1) nach einem der Ansprüche 4 oder 5, **dadurch gekennzeichnet, dass** die Lehnenschwenkachse (6) in der ersten Ebene (51) liegt.

7. Verstellbarer Fahrzeugsitz (1) nach einem der Ansprüche 4 bis 6, **dadurch gekennzeichnet, dass** die Lehnenschwenkachse (6) in der zweiten Ebene (52) liegt.

8. Verstellbarer Fahrzeugsitz (1) nach einem der Ansprüche 3 bis 7, **dadurch gekennzeichnet, dass** der erste Auflagepunkt (87) sich an einer ersten Mantelfläche (55) eines zylindersegmentartigen Bereichs eines ersten Entriegelungselements (11) der Entriegelungseinrichtung (10) befindet, und dass der zweite Auflagepunkt (88) sich an einer zweiten Mantelfläche (56) eines zylindersegmentartigen Bereichs eines zweiten Entriegelungselements (12) der Entriegelungseinrichtung (10) befindet.

9. Verstellbarer Fahrzeugsitz (1) nach Anspruch 8, **dadurch gekennzeichnet, dass** in der ersten Mantelfläche (55) eine erste Führungsnut (15) ausgebildet ist, in welche der erste Bowdenzug (83) eingelegt ist, und dass in der zweiten Mantelfläche (56) eine zweite Führungsnut (16) ausgebildet ist, in welche der zweite Bowdenzug (84) eingelegt ist.

10. Verstellbarer Fahrzeugsitz (1) nach einem der vorstehenden Ansprüche, **dadurch gekennzeichnet, dass** das Durchführelement (80) mindestens eine radial abstehende Manschette (94) aufweist.

11. Verstellbarer Fahrzeugsitz (1) nach einem der vorstehenden Ansprüche, **dadurch gekennzeichnet, dass** das Durchführelement (80) in der Design-Position eine Bewegung eines Entriegelungshebels (30) der Entriegelungseinrichtung (10) zur Entriegelung der Verriegelungsvorrichtungen (90) verhindert.

12. Verstellbarer Fahrzeugsitz (1) nach Anspruch 11, **dadurch gekennzeichnet, dass** das Durchführelement (80) an einer Stirnseite mindestens einen diametral verlaufenden Schlitz (78) aufweist, welcher mit einer an dem Entriegelungshebel (30) angebrachten Blockiernase (38) zusammen wirkt.

13. Verstellbarer Fahrzeugsitz (1) nach Anspruch 12, **dadurch gekennzeichnet, dass** das Durchführelement (80) derart angeordnet ist, dass bei in Design-Position befindlichem Fahrzeugsitz (1) der Schlitz (78) schräg zu der Bewegungsrichtung der Blockiernase (38) verläuft.

14. Verstellbarer Fahrzeugsitz (1) nach einem der Ansprüche 12 bis 13, **dadurch gekennzeichnet, dass** das Durchführelement (80) derart angeordnet ist, dass bei in Tisch-Position befindlichem Fahrzeugsitz (1) der Schlitz (78) in die gleiche Richtung verläuft wie die Bewegungsrichtung der Blockiernase (38).

15. Verstellbarer Fahrzeugsitz (1) nach einem der vorstehenden Ansprüche, **dadurch gekennzeichnet, dass** bei einer Schwenkung der Rückenlehne (3) von der Design-Position in die Tisch-Position das Durchführelement (80) sich relativ zu der Entriegelungseinheit (10) dreht.

## Claims

1. An adjustable vehicle seat (1), comprising a seat part (2) and a backrest (3) which can be pivoted relative to the seat part (2) about a backrest pivot axis (6) and can be locked in a design position, in which the backrest (3) is approximately upright, and in a table position, in which the backrest (3) rests on the seat part (2), the backrest (3) being pivoted about a pivoting angle (A) relative to the table position in the design position, and two locking apparatuses (90) which are assigned kinematically to the seat part (2) and by means of which the seat part (2) can be locked to a vehicle structure, and an unlocking unit (10) which is assigned kinematically to the backrest (3) for unlocking the locking apparatuses (90), which unlocking unit (10) is connected to the locking apparatuses (90) by means of two Bowden cables (83, 84), **characterized in that** a leadthrough element (80) which is assigned kinematically to the seat part (2) is provided, which leadthrough element (80) has a first leadthrough opening (81) for guiding through the first Bowden cable (83) and a second leadthrough opening (82) for guiding through the second Bowden cable (84), the first leadthrough opening (81) and the second leadthrough opening (82) being arranged at an identical spacing from the backrest pivot axis (6), and the leadthrough element (80) being of approximately cylindrical configuration and being fastened to the seat part (2) in such a way that its cylinder axis is aligned with the backrest pivot axis (6).

2. The adjustable vehicle seat (1) as claimed in claim 1, **characterized in that** the leadthrough element (80) has a radially protruding fastening arm (92).

3. The adjustable vehicle seat (1) as claimed in one of the preceding claims, **characterized in that** a first supporting point (87), from which the first Bowden cable (83) is guided in a direct line to the first leadthrough opening (81), and a second supporting point (88), from which the second Bowden cable (84) is guided in a direct line to the second leadthrough opening (82), are at the same spacing from the backrest pivot axis (6).

4. The adjustable vehicle seat (1) as claimed in claim 3, **characterized in that** a first plane (51) which runs parallel to the backrest pivot axis (6), on which first plane (51) a first center point of the first leadthrough opening (81) and a second center point of the second leadthrough opening (82) lie, and a second plane (52) which runs parallel to the backrest pivot axis (6), on which second plane (52) the first supporting point (87) and the second supporting point (88) lie, lie offset with respect to one another by half the pivoting angle (A) in the design position of the backrest (3).

5. The adjustable vehicle seat (1) as claimed in claim 4, **characterized in that** the first plane (51) and the second plane (52) lie offset with respect to one another by half the pivoting angle (A) in the table position of the backrest (3).

6. The adjustable vehicle seat (1) as claimed in either of claims 4 and 5, **characterized in that** the backrest pivot axis (6) lies in the first plane (51).

7. The adjustable vehicle seat (1) as claimed in one of claims 4 to 6, **characterized in that** the backrest pivot axis (6) lies in the second plane (52).

8. The adjustable vehicle seat (1) as claimed in one of claims 3 to 7, **characterized in that** the first supporting point (87) is situated on a first circumferential face (55) of a cylinder segment-like region of a first unlocking element (11) of the unlocking device (10), and **in that** the second supporting point (88) is situated on a second circumferential face (56) of a cylinder segment-like region of a second unlocking element (12) of the unlocking device (10).

9. The adjustable vehicle seat (1) as claimed in claim 8, **characterized in that** a first guide groove (15) is formed in the first circumferential face (55), into which first guide groove (15) the first Bowden cable (83) is inserted, and **in that** a second guide groove (16) is formed in the second circumferential face (56), into which second guide groove (16) the second Bowden cable (84) is inserted.

10. The adjustable vehicle seat (1) as claimed in one of the preceding claims, **characterized in that** the leadthrough element (80) has at least one radially protruding collar (94).

11. The adjustable vehicle seat (1) as claimed in one of the preceding claims, **characterized in that**, in the design position, the leadthrough element (80) prevents a movement of an unlocking lever (30) of the unlocking device (10) for unlocking the locking apparatuses (90).

12. The adjustable vehicle seat (1) as claimed in claim 11, **characterized in that**, on one end side, the leadthrough element (80) has at least one diametrically running slot (78) which interacts with a blocking lug (38) which is attached to the unlocking lever (30).

13. The adjustable vehicle seat (1) as claimed in claim 12, **characterized in that** the leadthrough element (80) is arranged in such a way that, when the vehicle seat (1) is situated in the design position, the slot (78) runs obliquely with respect to the movement direction of the blocking lug (38).

14. The adjustable vehicle seat (1) as claimed in either of claims 12 and 13, **characterized in that** the leadthrough element (80) is arranged in such a way that, when the vehicle seat (1) is situated in the table position, the slot (78) runs in the same direction as the movement direction of the blocking lug (38).

15. The adjustable vehicle seat (1) as claimed in one of the preceding claims, **characterized in that**, during pivoting of the backrest (3) from the design position into the table position, the leadthrough element (80) rotates relative to the unlocking unit (10).

## Revendications

1. Siège de véhicule réglable (1), comprenant :
une partie de siège (2) et un dossier (3) qui peut être verrouillé par rapport à la partie de siège (2) de manière à pouvoir pivoter autour d'un axe de pivotement de dossier (6) et dans une position design, dans laquelle le dossier (3) est approximativement vertical, et dans une position table, dans laquelle le dossier (3) repose sur la partie de siège (2),
le dossier (3), dans la position design, étant pivoté par rapport à la position table suivant un angle de pivotement (A),
et deux dispositifs de verrouillage (90) associés de manière cinématique à la partie de siège (2),
au moyen desquels la partie de siège (2) peut être verrouillée à une structure de véhicule,
ainsi qu'une unité de déverrouillage (10) associée de manière cinématique au dossier (3), pour déverrouiller les dispositifs de verrouillage (90), laquelle est connectée au moyen de deux câbles Bowden (83, 84) aux dispositifs de verrouillage (90),
**caractérisé en ce**
**qu'**un élément de guidage (80) associé de manière cinématique à la partie de siège (2) est prévu,
lequel présente une première ouverture de guidage (81) pour le guidage du premier câble Bowden (83) et une deuxième ouverture de guidage (82) pour le guidage du deuxième câble Bowden (84),
la première ouverture de guidage (81) et la deuxième ouverture de guidage (82) étant disposées à la même distance de l'axe de pivotement de dossier (6), et l'élément de guidage (80) étant configuré approximativement sous forme cylindrique et étant fixé à la partie de siège (2) de telle sorte que son axe de cylindre soit aligné avec l'axe de pivotement de dossier (6).

2. Siège de véhicule réglable (1) selon la revendication 1, **caractérisé en ce que** l'élément de guidage (80) présente un bras de fixation (92) saillant radialement.

3. Siège de véhicule réglable (1) selon l'une quelconque des revendications précédentes, **caractérisé en ce qu'**un premier point d'appui (87), depuis lequel le premier câble Bowden (83) est guidé en ligne directe jusqu'à la première ouverture de guidage (81), et un deuxième point d'appui (88), depuis lequel le deuxième câble Bowden (84) est guidé en ligne directe jusqu'à la deuxième ouverture de guidage (82), présentent la même distance à l'axe de pivotement de dossier (6).

4. Siège de véhicule réglable (1) selon la revendication 3, **caractérisé en ce qu'**un premier plan (51) s'étendant parallèlement à l'axe de pivotement de dossier (6), sur lequel sont situés un premier centre de la première ouverture de guidage (81) et un deuxième centre de la deuxième ouverture de guidage (82), et un deuxième plan (52) s'étendant parallèlement à l'axe de pivotement de dossier (6), sur lequel sont situés le premier point d'appui (87) et le deuxième point d'appui (88), sont disposés de manière décalée l'un par rapport à l'autre de la moitié de l'angle de pivotement (A) dans la position design du dossier (3).

5. Siège de véhicule réglable (1) selon la revendication 4, **caractérisé en ce que** le premier plan (51) et le deuxième plan (52) sont situés de manière décalée l'un par rapport à l'autre de la moitié de l'angle de pivotement (A) dans la position table du dossier (3).

6. Siège de véhicule réglable (1) selon l'une quelconque des revendications 4 ou 5, **caractérisé en ce que** l'axe de pivotement de dossier (6) est situé dans le premier plan (51).

7. Siège de véhicule réglable (1) selon l'une quelconque des revendications 4 à 6, **caractérisé en ce que** l'axe de pivotement de dossier (6) est situé dans le deuxième plan (52).

8. Siège de véhicule réglable (1) selon l'une quelconque des revendications 3 à 7, **caractérisé en ce que** le premier point d'appui (87) se trouve au niveau d'une première surface d'enveloppe (55) d'une région de type segment cylindrique d'un premier élément de déverrouillage (11) du dispositif de déverrouillage (10), et **en ce que** le deuxième point d'appui (88) se trouve au niveau d'une deuxième surface d'enveloppe (56) d'une région de type segment cylindrique d'un deuxième élément de déverrouillage (12) du dispositif de déverrouillage (10).

9. Siège de véhicule réglable (1) selon la revendication 8, **caractérisé en ce que** dans la première surface d'enveloppe (55) est réalisée une première rainure de guidage (15) dans laquelle est inséré le premier câble Bowden (83), et **en ce que** dans la deuxième surface d'enveloppe (56) est réalisée une deuxième rainure de guidage (16) dans laquelle est inséré le deuxième câble Boden (84).

10. Siège de véhicule réglable (1) selon l'une quelconque des revendications précédentes, **caractérisé en ce que** l'élément de guidage (80) présente au moins une manchette saillant radialement (94).

11. Siège de véhicule réglable (1) selon l'une quelconque des revendications précédentes, **caractérisé en ce que** l'élément de guidage (80) dans la position design empêche un déplacement d'un levier de déverrouillage (30) du dispositif de déverrouillage (10) pour déverrouiller les dispositifs de verrouillage (90).

12. Siège de véhicule réglable (1) selon la revendication 11, **caractérisé en ce que** l'élément de guidage (80) présente, au niveau d'un côté frontal, au moins une fente (78) s'étendant diamétralement, laquelle coopère avec un ergot de blocage (38) disposé sur le levier de déverrouillage (30).

13. Siège de véhicule réglable (1) selon la revendication 12, **caractérisé en ce que** l'élément de guidage (80) est disposé de telle sorte que, dans la position design du siège de véhicule (1), la fente (78) s'étende obliquement par rapport à la direction de déplacement de l'ergot de blocage (38).

14. Siège de véhicule réglable (1) selon l'une quelconque des revendications 12 et 13, **caractérisé en ce que** l'élément de guidage (80) est disposé de telle sorte que dans la position table du siège de véhicule (1), la fente (78) s'étende dans la même direction que la direction de déplacement de l'ergot de blocage (38).

15. Siège de véhicule réglable (1) selon l'une quelconque des revendications précédentes, **caractérisé en ce que** dans le cas d'un pivotement du dossier (3) de la position design dans la position table, l'élément de guidage (80) tourne par rapport à l'unité de déverrouillage (10).
